# EUROPEAN PATENT APPLICATION

(11) **EP 4 755 275 A1**
(43) Date of publication of application: **10.06.2026**
(21) Application number: 25219579.7
(22) Date of filing: 28.11.2025
(51) Int. Cl.: A47L 7/00, A47L 9/10, A47L 11/20, A47L 11/40, B01D 29/00

(54) **CLEANING APPARATUS WITH LIQUID AND SOLID DEBRIS SORTING RECOVERY TANK ASSEMBLY**

(30) Priority: 03.12.2024 US 202463727314 P
(71) Applicant: Bissell Inc., Grand Rapids, MI 49544 (US)
(72) Inventor: STUIVE, Eric, Grand Rapids, 49544 (US); SMITH, Derek, Grand Rapids, 49544 (US)
(74) Representative: Sandersons

(57) **Abstract**

A cleaning apparatus (10) includes a liquid delivery system (14) in fluid communication with a supply tank (12). A suction source (18) is configured to generate a vacuum effect along an airflow path (20). A recovery tank assembly (24) includes a sorting channel (36) extending between a fluid inlet (26) and a fluid outlet (28). A proximal end (110) of the sorting channel (36) is larger than a distal end (114) thereof for controlling an airflow speed through the sorting channel (36). A separator (34, 210, 220, 250) at least partially defines the sorting channel (36) and includes a fluid permeable portion (38, 212, 252). Liquids and solid materials are configured to be directed through the sorting channel (36) by the suction source (18) with the liquids being directed through the fluid permeable portion (38, 212, 252) to be collected in a liquids collection area (30) below the fluid permeable portion (38, 212, 252) the solid materials being collected in a solids collection area (32) disposed along the airflow path (20) between the fluid inlet (26) and the fluid outlet (28).

## Description

### FIELD

The present disclosure generally relates to a cleaning apparatus with a recovery tank for collecting liquid and solid debris.

### BACKGROUND

Many extraction cleaners include systems for storing and delivering cleaning fluids to a surface to be cleaned. Additionally, many extraction cleaners generate a vacuum effect to draw dispensed cleaning fluid and masses into the extraction cleaner for collection. Extraction cleaners that dispense liquid are often configured to capture wet or liquid messes.

### BRIEF SUMMARY

According to one aspect of the present disclosure, a cleaning apparatus includes a supply tank configured to hold a cleaning liquid. A liquid delivery system is in fluid communication with the supply tank for dispensing the cleaning liquid on a surface. A suction source is configured to generate a vacuum effect along an airflow path. A suction inlet is in fluid communication with the suction source. A recovery tank assembly is disposed along the airflow path between the suction inlet and the suction source. The recovery tank assembly includes a fluid inlet and a fluid outlet. A sorting channel extends between the fluid inlet and the fluid outlet. A proximal end of the sorting channel has a greater size than a distal end of the sorting channel for controlling a speed of airflow through the sorting channel. A separator at least partially defines the sorting channel. At least a portion of the separator is fluid permeable. A liquids collection area is disposed below the portion of the separator that is fluid permeable for collecting liquids. A solids collection area is disposed along the airflow path between the fluid inlet and the fluid outlet for collecting solid materials. The liquids and the solid materials are configured to be directed through the sorting channel by the suction source with the liquids being directed through the portion of the separator that is fluid permeable to be collected in the liquids collection area and the solid materials being collected in the solids collection area.

According to another aspect of the present disclosure, a cleaning apparatus includes a supply tank configured to hold a cleaning liquid. A liquid delivery system is in fluid communication with the supply tank for dispensing the cleaning liquid on a surface. A suction source is configured to generate a vacuum effect along an airflow path. A suction inlet is in fluid communication with the suction source. A recovery tank assembly is disposed along the airflow path between the suction inlet and the suction source. The recovery tank assembly includes a sorting channel between a fluid inlet and a fluid outlet. The lid at least partially defines the sorting channel. A floor at least partially defines the sorting channel. A recovery tank is configured to couple with the lid. The floor is disposed between the lid and the recovery tank. A liquids collection area is in the recovery tank. The liquids collection area and a solids collection area are disposed along the airflow path between the fluid inlet and the fluid outlet. Liquids and solid materials are configured to be directed through the sorting channel with the vacuum effect generated by the suction source and sorted into the liquids collection area and the solids collection area, respectively.

According to yet another aspect of the present disclosure, a fluid delivery and recovery system for a cleaning apparatus includes a supply tank configured to hold a cleaning liquid. A liquid delivery system is in fluid communication with the supply tank for dispensing the cleaning liquid on a surface. A suction source is configured to generate a vacuum effect along an airflow path. A suction inlet is in fluid communication with the suction source. A recovery tank includes a first chamber portion with a liquids collection area and a second chamber portion with a solids collection area. A dividing wall extends between the first chamber portion and the second chamber portion. A lid is operably coupled to the recovery tank to be disposed over the liquids collection area and the solids collection area. The lid includes a fluid inlet, a fluid outlet, a sorting channel coupling the fluid inlet with the fluid outlet, and a floor at least partially defining the sorting channel. The floor has a liquids permeable portion at a proximal end of the sorting channel and over the liquids collection area for collected liquids to be directed through the floor and into the liquids collection area. The floor defines a guide opening at a distal end of the sorting channel for collected solid materials to be directed from the sorting channel and into the solids collection area.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a schematic diagram of a cleaning apparatus including a sorting recovery tank assembly, according to an aspect of the present disclosure;
FIG. 2A is a side perspective view of an upright cleaning apparatus with a sorting recovery tank assembly, according to an aspect of the present disclosure;
FIG. 2B is a side perspective view of a portable cleaning apparatus with a sorting recovery tank assembly, according to an aspect of the present disclosure;
FIG. 3 is a side perspective view of a sorting recovery tank assembly, according to an aspect of the present disclosure;
FIG. 4 is an exploded side perspective view of a sorting recovery tank assembly, according to an aspect of the present disclosure;
FIG. 5 is a top perspective cross-sectional view of a sorting recovery tank assembly with a lid including a sorting channel with a floor having a fluid permeable portion at a proximal end and a guide opening at a distal end, according to the present disclosure;
FIG. 6 is a bottom plan view of a lid for a recovery tank assembly including a floor having a fluid permeable for liquids, a guide opening for solids, and an airflow passage, according to the present disclosure;
FIG. 7 is a front elevational cross-sectional view of a sorting recovery tank assembly with a sorting channel above a liquids collection area and a solids collection area, according to the present disclosure;
FIG. 8 is a schematic diagram of a sorting recovery tank assembly with a recovery tank having a first chamber portion defining a liquids collection area and a second chamber portion defining a solids collection area, according to the present disclosure;
FIG. 9 is a side perspective cross-sectional view of a sorting recovery tank assembly with a sorting channel and a liquids collection area, according to the present disclosure;
FIG. 10 is a side perspective cross-sectional view of a sorting recovery tank assembly with a sorting channel and a solids collection area, according to the present disclosure;
FIG. 11 is a schematic diagram of a sorting recovery tank assembly with a recovery tank having a first chamber portion defining a liquids collection area and a second chamber portion defining a solids collection area and a sloped surface extending from the floor over the second chamber portion for directing liquids to the liquids collection area, according to the present disclosure;
FIG. 12 is a side perspective cross-sectional view of a sorting recovery tank assembly with a lid formed from an inner lid portion and an outer lid portion, according to the present disclosure;
FIG. 13 is a side perspective cross-sectional view of a sorting recovery tank assembly with a floor for a sorting channel having a recessed region at a proximal end of the sorting channel, according to the present disclosure;
FIG. 14 is a schematic diagram of a sorting recovery tank assembly with a floor for a sorting channel having a recessed region at a proximal end of the sorting channel over a liquids collection area, according to the present disclosure;
FIG. 15 is a top perspective cross-sectional view of a sorting recovery tank assembly with a lid including a sorting channel with a floor having a fluid permeable portion over a liquids collection area and the sorting channel defining a recessed region to form a solids collection area, according to the present disclosure;
FIG. 16 is a schematic diagram of a sorting recovery tank assembly including a sorting channel with a floor having a fluid permeable portion over a liquids collection area and defining a recessed region to form a solids collection area, according to the present disclosure; and
FIG. 17 is a schematic diagram of a sorting recovery tank assembly including a sorting channel with a floor having a fluid permeable portion over a liquids collection area and a downstream solids collection area in a distal receptacle, according to the present disclosure.

The components in the figures are not necessarily to scale, emphasis instead being placed upon illustrating the principles described herein.

### DETAILED DESCRIPTION

The present illustrated embodiments reside primarily in combinations of method steps and apparatus components related to a cleaning apparatus with a liquid and solid debris sorting recovery tank assembly. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

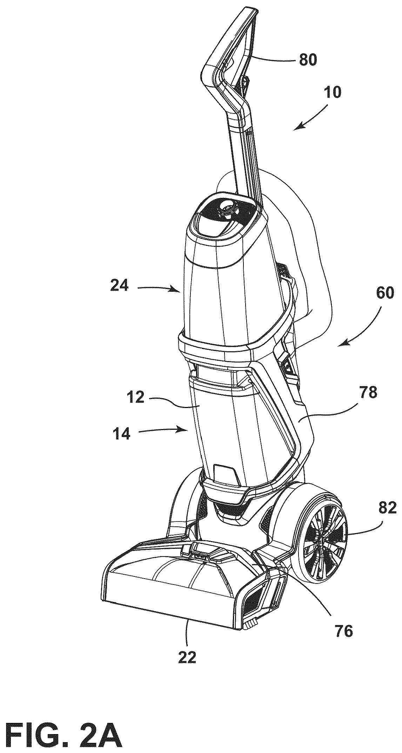

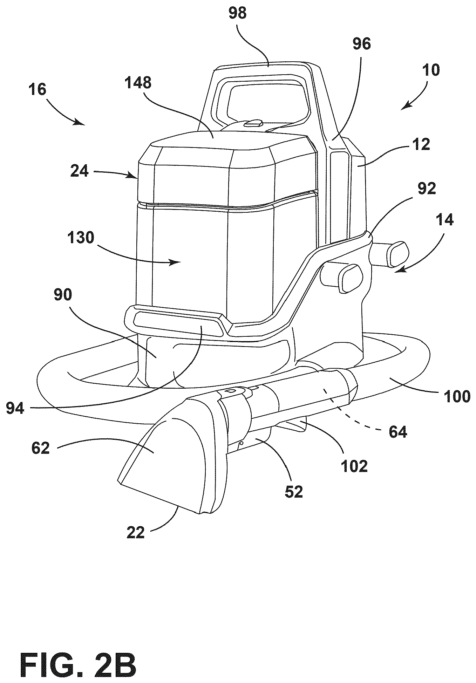

For purposes of description herein, the terms "upper," "lower," "right," "left," "rear," "front," "vertical," "horizontal," and derivatives thereof shall relate to the disclosure as oriented in FIGS. 2A and 2B. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

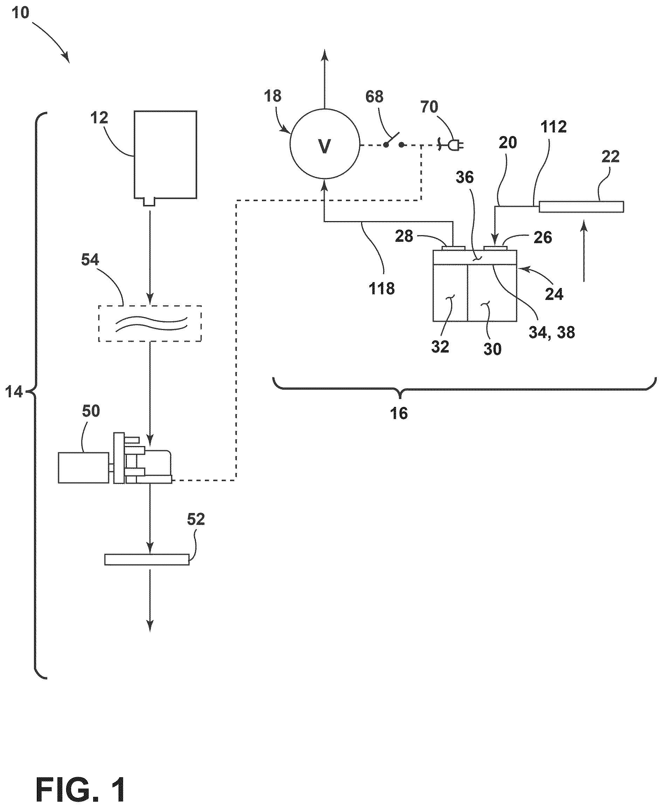

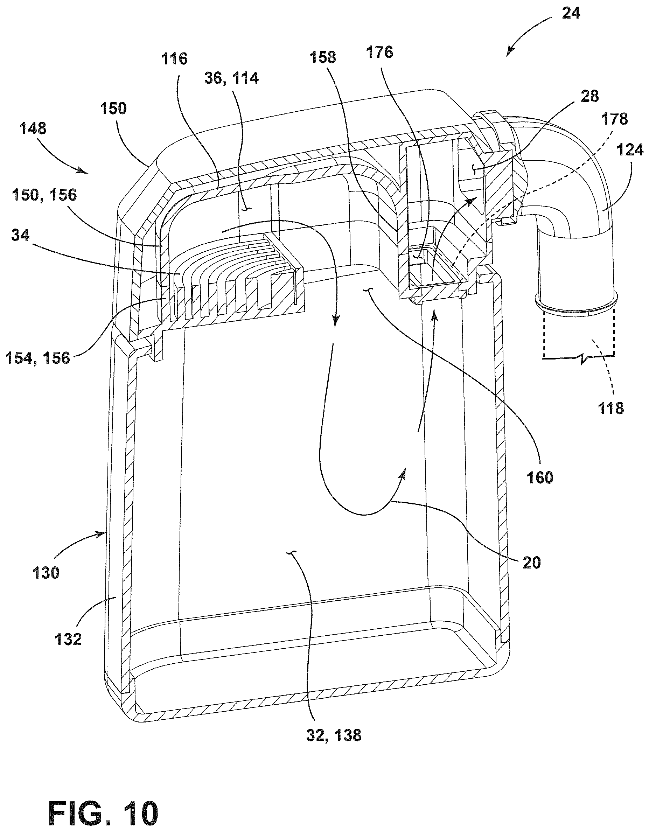

With reference to FIGS. 1-17, reference numeral 10 generally designates a cleaning apparatus 10 that includes a supply tank 12 configured to hold a cleaning liquid and a fluid or liquid delivery system 14 in fluid communication with the supply tank 12 for dispensing the cleaning liquid on a surface to be cleaned. The cleaning apparatus 10 also includes a recovery system 16 for capturing and collecting messes or debris, such as liquids and/or solid materials, from the surface being cleaned. A suction source 18 is configured to generate a vacuum effect along an airflow path 20 through the cleaning apparatus 10. A suction inlet 22 is in fluid communication with the suction source 18. A recovery tank assembly 24 is disposed along the airflow path 20 between the suction inlet 22 and the suction source 18. The recovery tank assembly 24 includes a fluid inlet 26 and a fluid outlet 28 downstream of the fluid inlet 26. The recovery tank assembly 24 also includes a liquids collection area 30 for collecting liquids and a solids collection area 32 for collecting solid materials. The liquids and the solid materials are configured to be captured by the suction inlet 22 using the vacuum effect and carried along the airflow path 20 to the recovery tank assembly 24 for collection and later disposal.

The recovery tank assembly 24 is configured to separate or sort the liquids and the solid materials into the separate collection areas 30, 32. The recovery tank assembly 24 includes a separator 34, generally configurated as a lower surface or floor 34, that at least partially defines a sorting chamber or channel 36 between the fluid inlet 26 and the fluid outlet 28. At least a portion 38 of the floor 34 is liquid or fluid permeable, and the liquids collection area 30 is generally disposed along the airflow path 20 and below the fluid permeable portion 38 of the floor 34. The solids collection area 32 is disposed along the airflow path 20 between the fluid inlet 26 and the fluid outlet 28. The liquids are configured to be directed into the sorting channel 36 with working air and then through the fluid permeable portion 38 of the floor 34 to be collected in the liquids collection area 30. The solid materials are configured to be directed into the sorting channel 36 with the working air and into the solids collection area 32.

Referring to FIG. 1, the recovery system 16 disclosed herein is configured to sort collected liquids and solid materials to be stored or retained separately during a cleaning process. The recovery system 16 may also be considered a wet/dry sorting recovery system 16 or a dual-zone recovery system 16. The separation of the liquids and the solid materials may improve the cleaning function of the cleaning apparatus 10 by reducing or preventing a mixture that can form and harden in a single collection space when liquids and solid debris mix. Further, reducing or preventing this mixture can increase a user experience by allowing more convenient disposal of the captured liquids and solid materials. Moreover, this sorting may improve the separation of debris materials, both liquids and solids, from the working air before the working air flows towards/through the suction source 18 along the airflow path 20. The recovery system 16 may separately collect the liquids and the solid materials from the surface being cleaned and/or may collect the liquids and solid materials simultaneously. The solid materials may be referred to as "dry" materials, however the solid materials may include wet, yet solid pieces (e.g., cereal in milk). The recovery system 16 may sort the liquids into the liquids collection area 30 and the solid materials into the solids collection area 32 when collecting liquids alone, solid materials alone, or a combination of liquids and solid materials concurrently.

Typically, the sorting of the liquids and solid materials is sequential. In this regard, the liquids are separated from the working air first and then the solid materials are separated from the working air. This recovery system 16 is different from systems where the recovered materials flow through a filter and the filter captures the solid debris. In configurations with the filter capturing the solid debris, the liquid has to flow through the captured solid debris to the liquid collection space and, thus, over time the system can become clogged and stop working. In this recovery system 16, the liquid is separated first, and the solid material is captured elsewhere, and thus the captured solid material does not substantially inhibit the collecting of the recovered liquid.

The cleaning apparatus 10 may be an extraction cleaner often used to clean rugs, carpeting, drapes, and upholstered surfaces. The cleaning apparatus 10 generally includes a fluid delivery and recovery system with the liquid delivery system 14 and the recovery system 16. The cleaning apparatus 10 includes the liquid delivery system 14 for dispensing cleaning liquids for one or more cleaning processes. The liquid delivery system 14 includes the supply tank 12 for holding and storing at least one cleaning liquid. The cleaning liquid can be water, one or more cleaning formulas, or combinations thereof. Many household extraction cleaning tasks can be performed using water to rinse the surface being cleaned and/or cleaning formula(s) that contains surfactants, stabilizers, fragrances, and/or other active and inactive ingredients.

The liquid delivery system 14 generally includes a pump 50, valves, and/or similar features to direct the liquid from the supply tank 12 and out of the cleaning apparatus 10 via a dispensing or spray outlet 52. The cleaning apparatus 10 may optionally include a heater 54 to heat or warm the cleaning liquids that are being dispensed. Depending on the configuration of the cleaning apparatus 10, the spray outlet 52 may be part of a housing 60 (see FIG. 2A), an accessory or tool 62 (see FIG. 2B), and/or a wand 64 (see FIG. 2B) for engaging the tool 62.

The recovery system 16 is configured to draw fluid (including air and liquids) and other debris (including the solid materials) into the cleaning apparatus 10. The recovery system 16 includes the suction source 18 to generate the suction or vacuum effect at the suction nozzle or inlet 22 to draw the liquids and/or solid materials from the surface being cleaned. The suction source 18 may be a motorized fan assembly. In certain aspects, the suction source 18 may be a motor and an impeller assembly where the motor is configured to drive the impeller assembly.

The recovery system 16 also includes the recovery tank assembly 24 disposed along the airflow between the suction inlet 22 and the suction source 18 for holding the collected materials during the cleaning process for later disposal. Generally, the suction source 18 is configured to generate the working airstream along the airflow path 20, which generally carries the liquids and solid materials along the airflow path 20. In other words, the cleaning apparatus 10 is configured to draw the liquid- and debris-laden working air through the suction inlet 22 and into the recovery tank assembly 24. The recovery tank assembly 24 is configured to sort the carried materials into either the liquids collection area 30 or the solids collection area 32. The working air is configured to flow through the recovery tank assembly 24, assisting with the separation process, and through the suction source 18 to be exhausted from the cleaning apparatus 10. Depending on the configuration of the cleaning apparatus 10, the suction inlet 22 may be part of the housing 60 (see FIG. 2A) and/or the accessory or tool 62 (see FIG. 2B).

Referring still to FIG. 1, at least the pump 50, the suction source 18, and the heater 54 are components of the cleaning apparatus 10 that are electrically coupled to a power source 68, such as a battery or a power cord plugged into a household electrical outlet. A power switch 70 between the power source 68 and the electrical components of the cleaning apparatus 10 can be selectively closed by the user to activate the electrical components. The power source 68 may be utilized for powering the cleaning apparatus 10 and/or components coupled thereto, such as the tool 62 and components of the tool 62 (See FIG. 2B).

Referring now to FIGS. 1-2B, the dual zone, sorting recovery system 16 may be included in a variety of cleaning apparatuses 10. For example, as illustrated in FIG. 2A, the cleaning apparatus 10 may be configured as an upright cleaning apparatus 10. The upright cleaning apparatus 10 includes the housing 60, which may include a foot or base 76 and an upright support 78 with an elongated handle 80. The user may use the elongated handle 80 to move and maneuver the upright cleaning apparatus 10, generally by rolling wheels 82 on an underlying surface. Often, the upright cleaning apparatus 10 has a drive assembly to assist the user in maneuvering the upright cleaning apparatus 10. Upright cleaning apparatuses 10 are generally larger and heavier with a lower surface proximate to the wheels 82 to engage the underlying floor 34 surface, such as via the suction inlet 22 and/or with an agitator.

As illustrated in FIG. 2B, the cleaning apparatus 10 may be a portable cleaning apparatus 10, which is generally smaller and lighter than the upright configuration for users to carry the portable cleaning apparatus 10. The portable cleaning apparatus 10 includes the housing 60, which generally includes a lower enclosure 90 defining seats 92, 94 for receiving and supporting the supply tank 12 and the recovery tank assembly 24, respectively. In the illustrated configuration, a central support 96 of the housing 60 extends from the lower enclosure 90 to be disposed between the seats 92, 94 and, consequently, the supply tank 12 and the recovery tank assembly 24 when seated on the housing 60. The central support 96 generally includes a handle 98 for carrying the portable cleaning apparatus 10.

Portable cleaning apparatuses 10, such as the configuration illustrated in FIG. 2B, often include the tool 62 coupled with the housing 60 via an accessory hose 100 and the wand 64. The tool 62 may allow the suction inlet 22 and/or the spray outlet 52 to be manually maneuverable by the user relative to the cleaning apparatus 10 and along the surface being cleaned. The tool 62 is configured to utilize various features and functions of the cleaning apparatus 10, such as one or both of the liquid delivery system 14 and the recovery system 16 when the tool 62 is coupled to cleaning apparatus 10. The wand 64, which couples the tool 62 to the accessory hose 100, may include a trigger 102 for releasing/spraying the liquid from the liquid delivery system 14 via the spray outlet 52. The recovery system 16 can generate the vacuum effect at the suction inlet 22 of the tool 62 to draw the liquids and solid materials into the recovery tank assembly 24 and, ultimately, into the respective collection areas 30, 32. The tool 62 can also be utilized with the upright cleaning apparats 10 illustrated in FIG. 2A.

Referring now to FIGS. 1-3, the recovery tank assembly 24 includes the fluid inlet 26 for receiving the liquid- and debris-laden working air captured at the suction inlet 22. The working air is configured to flow along the airflow path 20 through the recovery tank assembly 24. As the working air flows through the recovery tank assembly 24, the recovery tank assembly 24 is configured to sort the liquids carried by the working air into the liquids collection area 30, the solids carried by the working air into the solids collection area 32, or both the liquids and the solids into the respective collection areas 30, 32. The recovery system 16 includes separate liquids and solids collection areas 30, 32 along the airflow path 20 and between the fluid inlet 26 and the fluid outlet 28 of the recovery tank assembly 24.

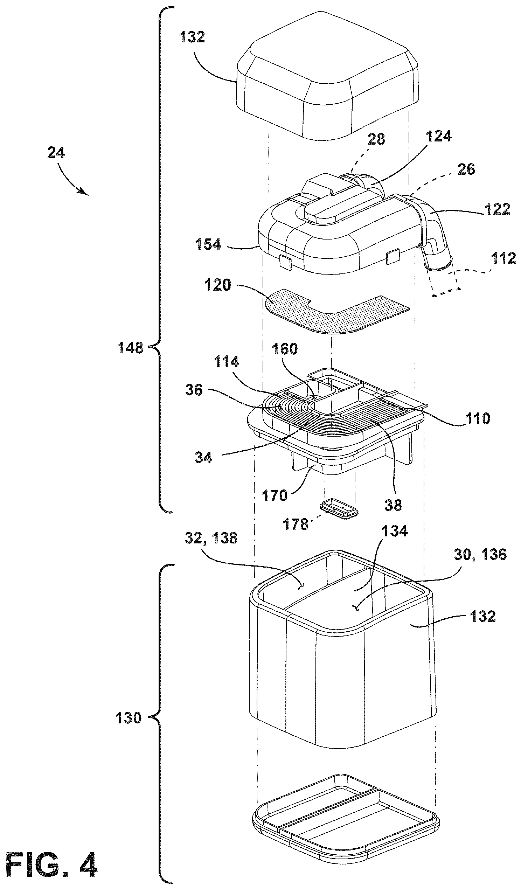

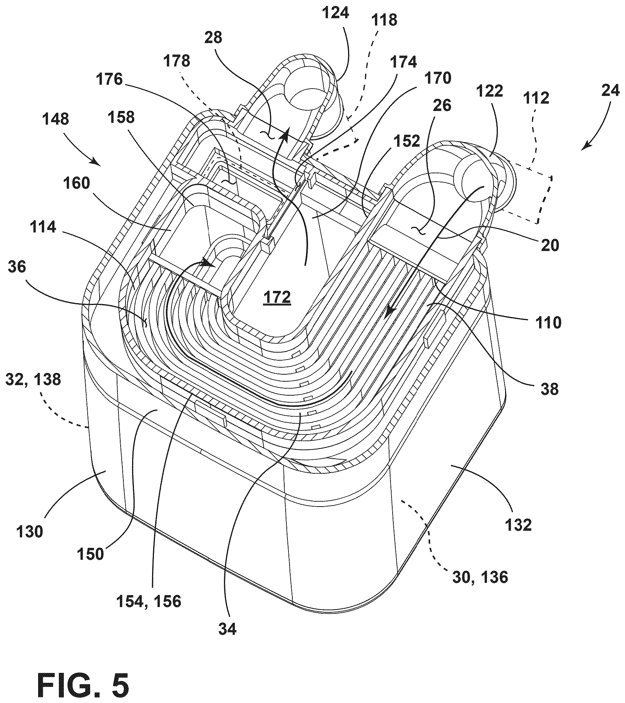

With reference to FIGS. 4 and 5, the sorting channel 36 extends between the fluid inlet 26 and the fluid outlet 28. The configuration of the sorting channel 36 and components that define the sorting channel 36 can promote or assist with the separation of the liquids and solid materials from the working air into the respective collection areas 30, 32. For example, the sorting channel 36 is generally rounded, curved, or defines one or more curves or bends. In this regard, the sorting channel 36 may generally be or define a "U" shape, "C" shape, "J" shape, "L" shape, or the like. The bends or curves may promote the separation of the liquids from a branch of the airflow path 20 along the sorting channel 36 by directing the liquids downwards to be collected, rather than around the curves and bends. Moreover, the sorting channel 36 is generally a horizontal channel with the airflow, liquids, and/or solid materials being directed vertically into the collection areas 30, 32, using the vacuum effect and/or gravitational forces.

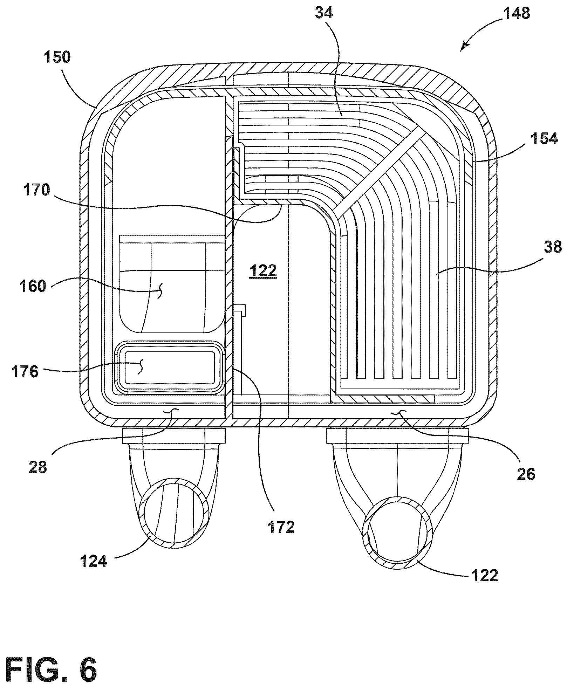

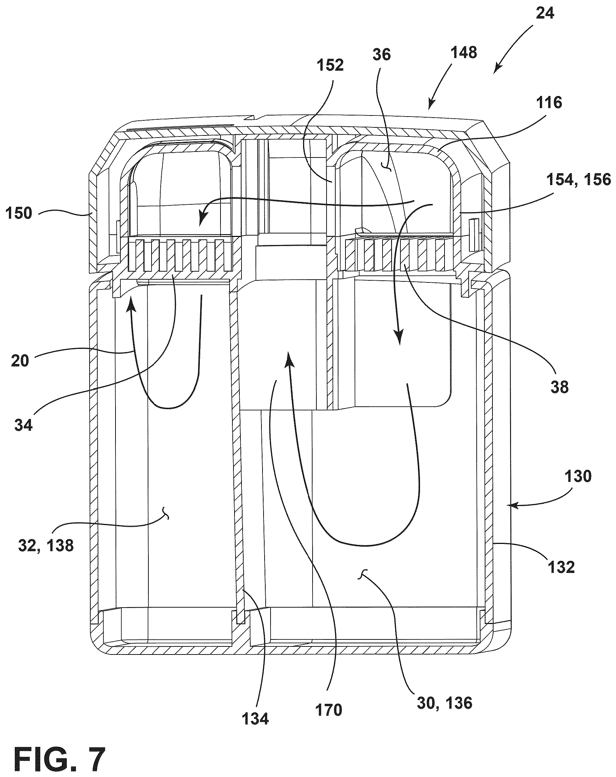

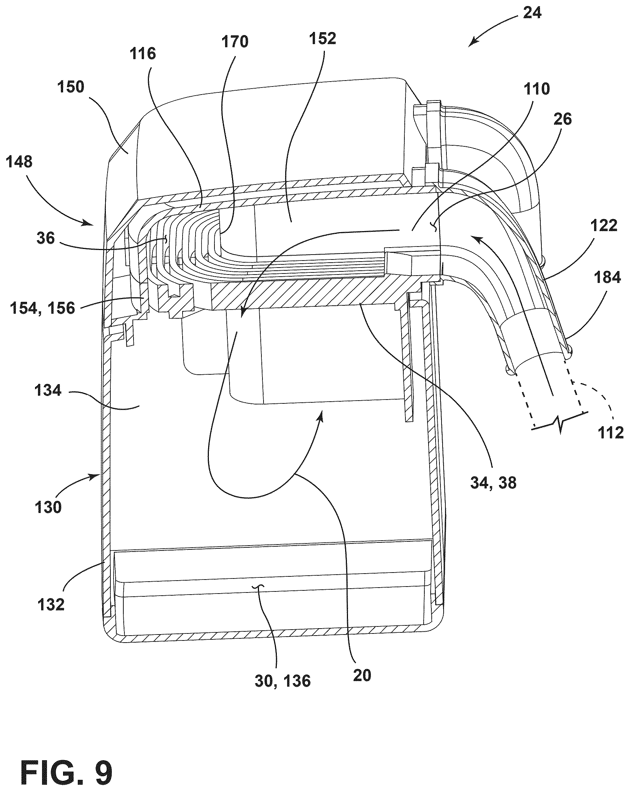

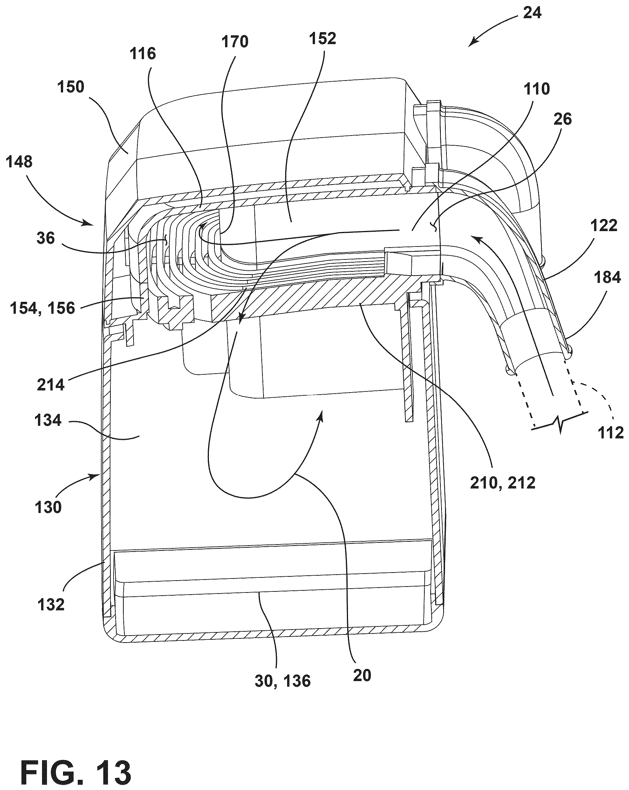

Additionally or alternatively, a height, diameter, or size of the sorting channel 36 may vary between the fluid inlet 26 and the fluid outlet 28 to assist with sorting the materials into the respective collection areas 30, 32. For example, the fluid inlet 26 and a receiving or proximal end 110 of the sorting channel 36 proximate to the fluid inlet 26 may have a first, larger size. This size may be greater than the size or diameter of an inlet conduit 112 disposed upstream of the fluid inlet 26 for directing air toward the fluid inlet 26. The increase in size from the inlet conduit 112 to the fluid inlet 26 and the proximal end 110 of the sorting channel 36 results in a speed of the airflow slowing as the working air enters the sorting channel 36. The slowing air promotes the liquids being directed into the liquids collection area 30. As the sorting channel 36 extends toward a distal end 114 proximate to the fluid outlet 28, the size or diameter of the sorting channel 36 narrows or reduces. The narrowing sorting channel 36 results in the speed of the airflow increasing, which can assist in carrying the solid materials to the solids collection area 32. The size of the sorting channel 36 may be due to a size of the fluid inlet 26 (see FIG. 6), a cover portion 116 forming the sorting channel 36 being sloped or angled toward the floor 34 (see FIGS. 7 and 9), and/or the floor 34 defining a sloped or angled surface (see FIGS. 13-17).

Further, the configuration of the floor 34 may assist with sorting the liquids and solid materials into the separate collection areas 30, 32. At least the portion 38 of the floor 34 proximate to the fluid inlet 26 is fluid permeable. The floor 34 may define apertures, openings, slots, etc. or be constructed of a fluid-permeable material. The floor 34 can include or be any element, material, or combination thereof that permits air and liquids to flow through the fluid permeable portion 38 while reducing or preventing the solid materials or solid materials of a predetermined size from being directed or passing through the floor 34. Accordingly, the solid materials may be retained in the sorting channel 36 beyond the fluid permeable portion 38 of the floor 34 to continue to be carried to or retained in the solids collection area 32. The fluid permeable portion 38 of the floor 34 may form a discrete segment of the floor 34 that aligns with the liquids collection area 30. Alternatively, the fluid permeable portion 38 may extend beyond the liquids collection area 30 and/or along an entire or substantial length of the floor 34.

Additionally, a floor layer 120 may be disposed over the floor 34 or integrated into the floor 34. The floor layer 120 may be a perforated layer that can assist with sorting the liquids and the solid materials into the separate collection areas 30, 32. In certain aspects, the floor layer 120 may have smaller openings to reduce the openings of the fluid permeable portion 38 to further reduce any small solid debris that may fall into the liquid collection area 32. The floor layer 120 may be removable, which may allow for easier cleaning of the sorting channel 36 for the consumer. The floor layer 120 may use or be a variety of porous materials to assist with sorting the liquid and solid debris materials.

Referring to FIGS. 4 and 5, the fluid inlet 26 and the fluid outlet 28 of the recovery tank assembly 24 may be in fluid communication with the inlet conduit 112 and an outlet conduit 118, respectively. The inlet and outlet conduits 112, 118 may be components of the recovery tank assembly 24 and/or within the housing 60 for forming portions of the airflow path 20. The location of the fluid inlet 26 and the fluid outlet 28 and the configuration of the conduits 112, 118 may depend on the configuration of the cleaning apparatus 10 and the location of the recovery tank assembly 24 relative to the housing 60 of the cleaning apparatus 10. The dual-zone recovery system 16 may also have a variety of configurations for arranging the two collection areas 30, 32, which may depend on the configuration of the cleaning apparatus 10 and/or the recovery tank assembly 24.

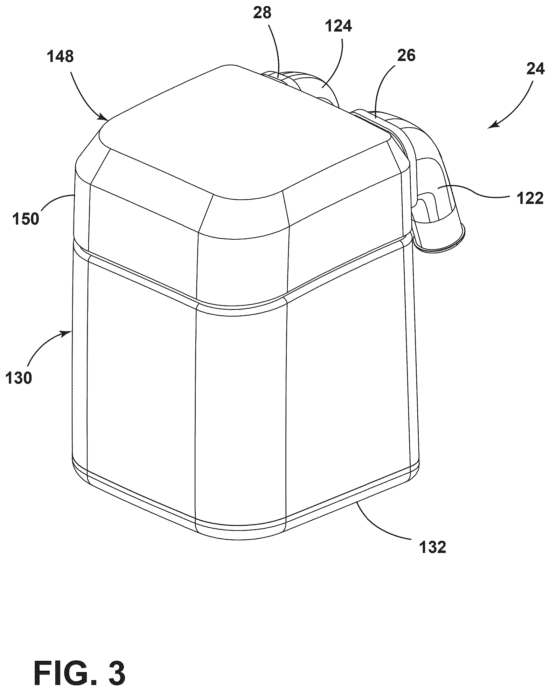

Referring to FIGS. 2B and 3, an exemplary configuration of the recovery tank assembly 24 is illustrated for the portable cleaning apparatus 10. In the example illustrated in FIG. 2B, the housing 60 of the portable cleaning apparatus 10 includes two seats 92, 94 on opposing sides of the central support 96. The first seat 92 is configured to receive the supply tank 12. The supply tank 12 generally includes a valve that is configured to mate with a receiver on the housing 60 when the supply tank 12 is positioned in the first seat 92. This opens the valve to allow the cleaning liquid in the supply tank 12 to be directed to the spray outlet 52 by the pump 50 (FIG. 1). The second seat 94 is configured to receive the recovery tank assembly 24. The housing 60 includes mating components for providing fluid communication with the fluid inlet 26 and the fluid outlet 28. In certain aspects, the conduits 112, 118 may be disposed in the housing 60 to openings in the housing 60, which are configured to align and mate with the fluid inlet 26 and the fluid outlet 28 of the recovery tank assembly 24 or connectors 122, 124 extending therefrom.

Referring to FIGS. 3 and 4, the recovery tank assembly 24 includes a recovery tank 130 with an outer tank wall 132 and a dividing wall 134 to form a first chamber portion 136 defining the liquids collection area 30 and a second chamber portion 138 defining the solids collection area 32. The dividing wall 134 extends between opposing sections of the outer tank wall 132, such that the chamber portions 136, 138 are disposed laterally adjacent to one another. Typically, the liquids collection area 30 in the first chamber portion 136 is upstream relative to the solids collection area 32 in the second chamber portion 138. Accordingly, the first chamber portion 136 is generally arranged on a same side of the recovery tank assembly 24 as the fluid inlet 26, while the second chamber portion 138 is disposed on the same side as the fluid outlet 28. Moreover, in the illustrated configuration, the first chamber portion 136 is illustrated as being larger than the second chamber portion 138 to have a higher capacity. However, the chamber portions 136, 138 may be the same size or the second chamber portion 138 may be larger than the first chamber portion 136 without departing the teachings herein.

Referring to FIGS. 5 and 6, while the recovery tank 130 includes the collection areas 30, 32 for holding the liquids and solid materials, the majority, or all, of the components for sorting the liquids and solid materials into the respective collection areas 30, 32 can be included in a cover or lid 148 for the recovery tank 130. The lid 148 is configured to mate or operably couple with the recovery tank 130 to enclose the chamber portions 136, 138. The lid 148 includes an outer lid wall 150 configured to couple with the outer tank wall 132 of the recovery tank 130 and form an interior of the lid 148.

The lid 148 also includes inner and outer guide walls 152, 154 that at least partially form the sorting channel 36 in the lid 148. The guide walls 152, 154 form a portion of the airflow path 20 through the lid 148 and define the shape of the sorting channel 36. The guide walls 152, 154 extend from proximate the fluid inlet 26 toward an opposing section of the outer lid wall 150, along the outer lid wall 150, and then toward the fluid outlet 28, forming the "J" or "U" shape path. The outer guide wall 154 includes a side portion 156 adjacent to the outer lid wall 150 and the cover portion 116 that extends toward/to the inner guide wall 152 to form a top to the sorting channel 36. An end wall 158 extends between the inner and outer guide walls 152, 154 proximate to the fluid outlet 28 to form an end barrier of the sorting channel 36 for assisting in blocking or deflecting the solids materials into the solids collection area 32. It is contemplated that other configurations of the lid 148 may be used, such as the outer guide wall 154 being omitted with the outer lid wall 150 acting as the outer bounds of the sorting channel 36.

The lid 148 includes the floor 34 extending between the guide walls 152, 154 to form a bottom portion of the sorting channel 36. Accordingly, the sorting channel 36 is formed entirely by the lid 148 in the configuration illustrated in FIGS. 5 and 6. The floor 34 extends between the fluid inlet 26 and the fluid outlet 28. More particularly, the floor 34 extends from the fluid inlet 26 to proximate to the end wall 158, following the "U" or "J" shape.

At least the portion 38 of the floor 34 disposed over the liquids collection area 30 is fluid permeable. The fluid permeable portion 38 is at least at the proximal end 110 of the sorting channel 36 proximate to the fluid inlet 26. In the configuration illustrated in FIGS. 5 and 6, the floor 34 is configured as a grate with slots or openings extending parallel with the guide walls 152, 154. The slots extend along the length of the floor 34 from the fluid inlet 26 at least over the liquids collection area 30. The section of the floor 34 over the second chamber portion 138 may include a solid surface to fill the slots or may have a solid configuration and may not be fluid permeable, as illustrated in FIG. 6. While the floor 34 is illustrated as a grate with slots, the floor 34 can include any element or combination of elements that allow fluid to pass through into the liquids collection area 30 while preventing solid debris or material of a predetermined size from passing therethrough.

A guide opening 160 is defined by the floor 34 adjacent to the end wall 158 at the distal end 114 of the sorting channel 36. The guide opening 160 is sufficiently sized for solid materials to fall or be directed through the guide opening 160. The guide opening 160 is disposed over or in fluid communication with the second chamber portion 138 to allow the solid materials to be directed from the sorting channel 36 to the solids collection area 32.

Referring still to FIGS. 5 and 6, as well as FIG. 7, in addition to the liquids and solid materials being directed through the recovery tank assembly 24, the working air is also directed through the recovery tank assembly 24, forming a first branch of the airflow path 20 through the recovery tank assembly 24. The vacuum effect generated by the suction source 18 (FIG. 1) can assist with pulling or directing the liquids into the liquids collection area 30, the solid materials into the solids collection area 32, and the working air through the recovery tank assembly 24. At least some working air is directed through the fluid permeable portion 38 of the floor 34 with the liquids. This can help direct the liquids through the floor 34. The recovery tank assembly 24 includes a divider 170, which extends into the first chamber portion 136 when the lid 148 is coupled with the recovery tank 130. The divider 170 engages with the dividing wall 134 to form an airflow passage 172. The inner guide wall 152 defines an airflow opening 174 proximate to the fluid outlet 28 and in fluid communication with the airflow passage 172. The working air that flows into the first chamber portion 136 is drawn through the airflow passage 172, through the airflow opening 174, and through the fluid outlet 28 toward the suction source 18 (FIG. 1).

Similarly, at least some of the working air is directed through the guide opening 160 and into the second chamber portion 138, forming a second branch of the airflow path 20 through the recovery tank assembly 24. The lid 148 defines an additional airflow opening 176 on an opposing side of the end wall 158, generally on an upper surface of the second chamber portion 138 (e.g., which may be considered a portion of the floor 34). The working air that flows with the solid materials into the second chamber portion 138 is drawn through the airflow opening 176 and through the fluid outlet 28.

A filter 178 may be disposed in one or both of the airflow openings 174, 176 or at the fluid outlet 28. The filter 178 may be any coarse or fine particulate filter or filter media. The filter(s) 178 can allow the working air to flow therethrough, while reducing or preventing debris materials (e.g., the liquids and solid materials) from flowing through the airflow openings 174, 176. The filter(s) 178 may reduce the debris materials that flow out of the recovery tank assembly 24 and to the suction source 18 (FIG. 1).

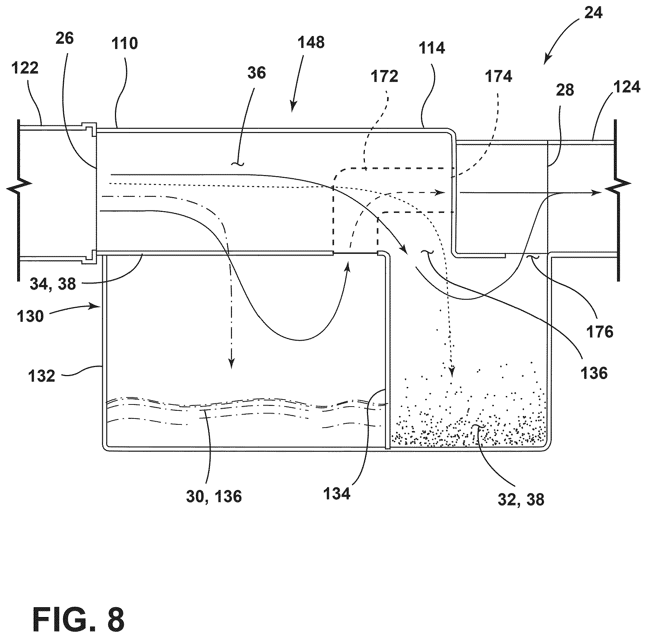

Referring to FIGS. 8-10, the size of fluid inlet 26 and/or the sorting channel 36 can control the speed of the working air through the sorting channel 36 to help separate the liquids and carry the solid materials. In the illustrated configuration, the connectors 122, 124 are coupled to the lid 148 at the fluid inlet 26 and the fluid outlet 28. The connectors 122, 124 may be part of the recovery tank assembly 24 or the cleaning apparatus 10. An inlet end 184 of the inlet connector 122 is configured to engage the inlet conduit 112. The inlet conduit 112 and the inlet end 184 of the connector have a first size or diameter. The fluid inlet 26 and/or the proximal end 110 of the sorting channel 36 has a second size or diameter, which is greater than the first size (see also FIG. 6). In certain aspects, the second size of the proximal end 110 is between about two and about four times the size of the first size of the inlet conduit 112. The increase in size causes the speed of the working air to slow as the working air enters the sorting channel 36. The size of the sorting channel 36 at the fluid inlet 26 may be based on the spacing between the cover portion 116 of the outer guide wall 154 and the floor 34. For example, the cover portion 116 may be angled to change or vary the size of the sorting channel 36.

The size of the sorting channel 36 decreases in size (e.g., a third size along the airflow path 20 at the recovery tank assembly 24) as the sorting channel 36 extends away from the fluid inlet 26 and toward the fluid outlet 28. The decrease in size may be gradual to drive an increase in the speed of the airflow. The decrease in size may be caused by a slope or angle of the cover portion 116 between the inner guide wall 152 and the side portion 156 of the outer guide wall 154. The lowering of the cover portion 116 between the inner guide wall 152 and the outer guide wall 154 (e.g., lowering toward the floor 34) can decrease the size of the sorting channel 36. It is contemplated that the inner guide wall 152 and/or the side portion 156 of the outer guide wall 154 may also be angled toward the opposing guide wall 152, 154 to narrow the sorting channel 36.

Referring still to FIGS. 8-10, in operation, the suction source 18 (FIG. 1) is configured to generate the vacuum effect along the airflow path 20, including through the recovery tank assembly 24. The vacuum effect generates the working airstream, directing the working air and the collected liquids and/or solid materials along the airflow path 20 to be collected. The working air is directed through the fluid inlet 26 and into the larger proximal end 110 of the sorting channel 36. The speed of the working air slows down, and liquids being carried by the working air are directed through the fluid permeable portion 38 of the floor 34 and into the liquids collection area 30.

A majority of the liquids may be directed through the floor 34 at or prior to the bends or curves in the sorting channel 36. The bends and curves may be more difficult for the liquids to be directed around with the working air. Accordingly, the liquids instead flow downward through the floor 34. Further, the liquids may be directed in a generally linear path and be stopped by the outer guide wall 154 forming the bend. Stopping the liquid may redirect the liquids downward and/or along the outer guide wall 154 and, ultimately, through the floor 34.

The liquids collection area 30 is generally disposed below the fluid permeable portion 38 of the floor 34. In various aspects, at least some of the working air may flow with the liquids through the fluid permeable portion 38, which may assist in drawing the liquid through floor 34. The working air then flows through the airflow passage 172, the airflow opening 174, optionally through the filter 178, and through the fluid outlet 28.

In the sorting channel 36, at least some of the working air and solid materials being carried by the working air continue to be directed over the floor 34 and toward the fluid outlet 28. The speed of the working air increases as the working air flows through the narrowed section of the sorting channel 36. The increase in speed may assist in carrying the solid materials to and through the guide opening 160 adjacent to the end wall 158. The end wall 158 may form a stop or barrier for the working air and the solid materials to assist with guiding the solid materials and working air into the solids collection area 32. The recovery system 16 may utilize both the vacuum effect and gravitational forces for drawing the liquids and solid materials into the respective collection area 30, 32.

The working air in the second chamber portion 138 is directed through the airflow opening 176, optionally through the filter 178, and through the fluid outlet 28. The two branches of working air (from the liquids collection area 30 and the solids collection area 32) rejoin when exiting the recovery tank assembly 24. The working air flows through the outlet connector 124, the outlet conduit 118, and the suction source 18 (FIG. 1) to be vented from the cleaning apparatus 10.

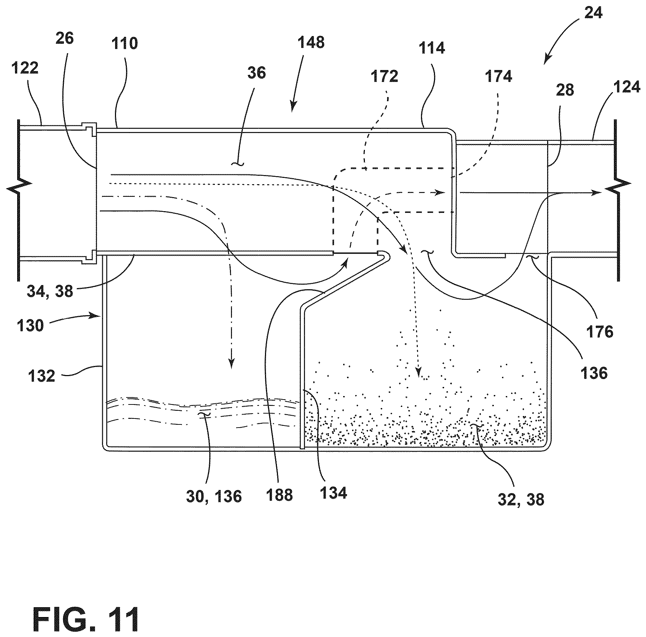

Referring to FIG. 11, the floor 34 may include the fluid permeable portion 38 along a substantial or the entire length thereof. In this regard, the openings in the floor 34 extend over the second chamber portion 138 with the solids collection area 32. A sloped surface 188 may extend from the floor 34 and at least to the dividing wall 134. The sloped surface 188 may be a solid surface for guiding any liquids that flow through the floor 34 over the second chamber portion 138 back to the first chamber portion 136 to be collected in the liquids collection area 30. This sloped surface 188 may be advantageous for providing a longer length of the sorting channel 36 for separating the liquids without affecting the solid materials in the solid collections area 32.

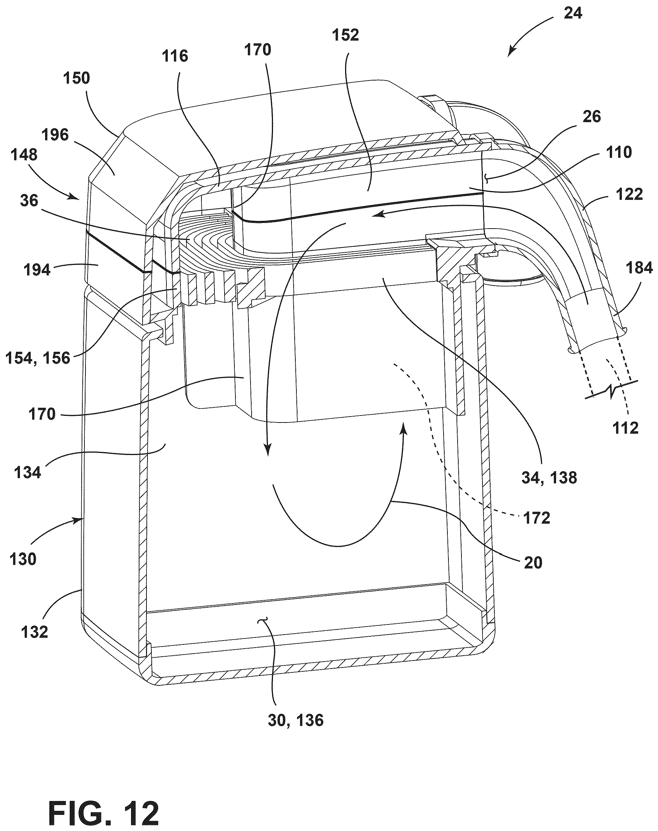

Referring now to FIG. 12, the lid 148 may be constructed of at least two components, such as a bottom or inner lid portion 194 and a top or outer lid portion 196. The lid portions 194, 196 may be coupled via a hinge or may be completely separable. A seal or gasket may be disposed at the engagement location between the lid portions 194, 196 to provide a fluid tight seal for the sorting channel 36. In examples where the lid 148 includes the lid portions 194, 196, each lid portion 194, 196 may form a portion of the sorting channel 36, such that the sorting channel 36 is defined by and between the two lid portions 194, 196. For example, the inner lid portion 194 is configured to engage the outer tank wall 132, and the outer lid portion 196 engages the inner lid portion 194.

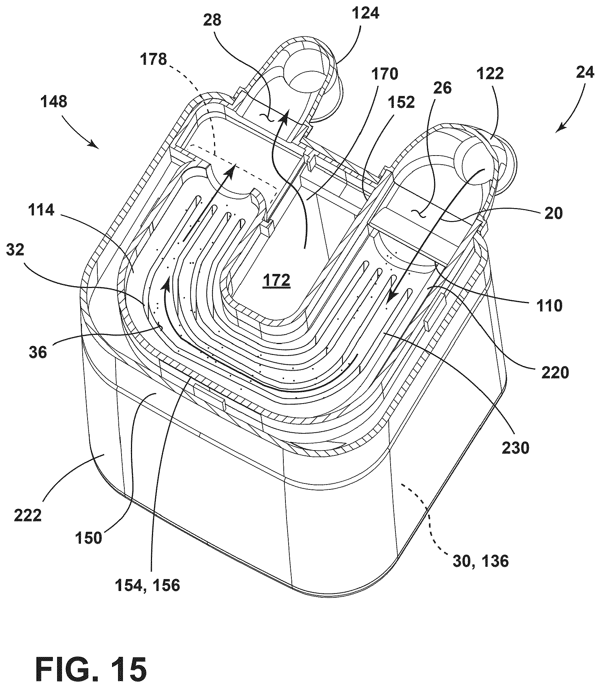

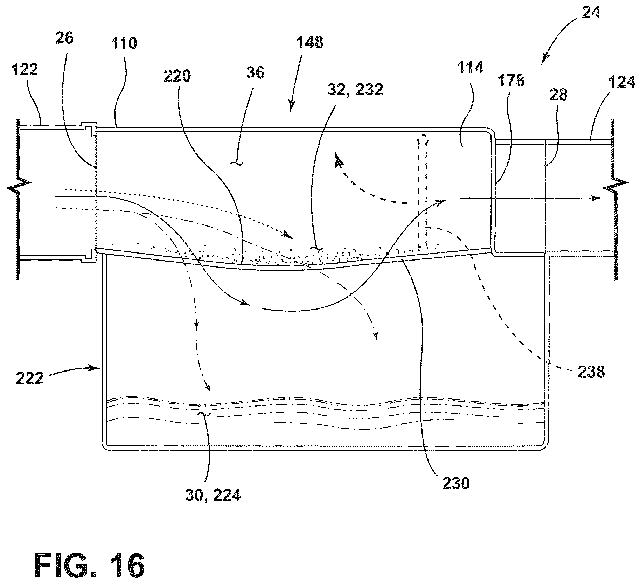

The inner lid portion 194 can include lower or first wall portions, the floor 34 between the first wall portions, the guide opening 160, and the divider 170. The outer lid portion 196 can include the cover portion 116 and upper or second wall portions that extend from the cover portion 116. The second wall portions mate with or engage the first wall portions to form the guide walls 152, 154 and the end wall 158, enclosing or forming the sorting channel 36. Each of the lid portions 194, 196 may also include a portion of the fluid inlet 26 and the fluid outlet 28. The configuration of the lid 148 with the lid portions 194, 196 may be advantageous for accessing the sorting channel 36, such as for cleaning. Further, in configurations where the solids collection area 32 is within the sorting channel 36 (see FIGS. 15 and 16) the lid portions 194, 196 may be advantageous for disposing of the collected solid materials.

Moreover, the floor 34 may be a removable component for cleaning or disposing of collected materials. The lid portions 194, 196 may be advantageous for removing the floor 34 from the lid 148. Further, it is contemplated that the lid 148 may be configured as or include the outer lid portion 196 with the cover portion 116 and the upper wall portions and another component, such as the housing 60 (FIGS. 2A or 2B), may include the floor 34 and the lower wall portions. In such examples, the lid 148 may form a portion of the sorting channel 36 and one or more mating component(s) engage the lid 148 to form the full sorting channel 36.

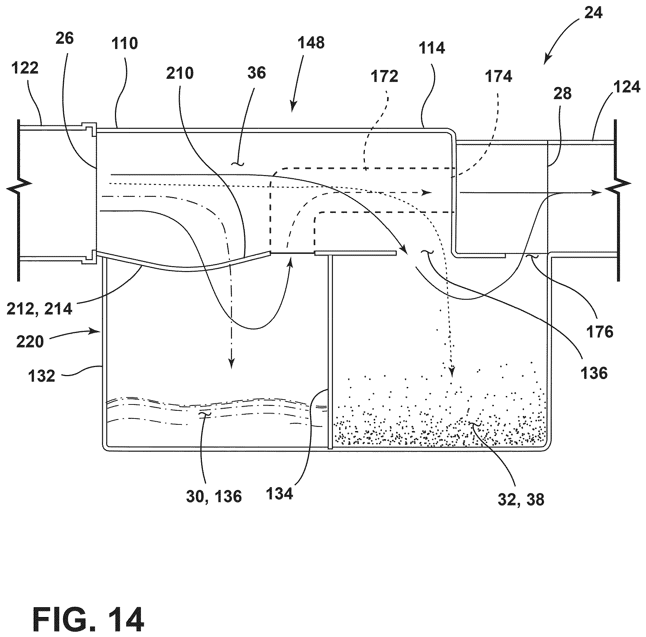

Referring now to FIGS. 13 and 14, the recovery tank assembly 24 includes an additional or alternative configuration of a separator or floor 210 for the sorting channel 36. The remainder of the recovery tank assembly 24 may be the same as any configuration described previously herein, with the primary difference being in the shape or configuration of the floor 210. In this configuration, the floor 210 includes a liquid or fluid permeable portion 212. The fluid permeable portion 212 may be apertures, openings, slots, etc. arranged at least proximate to the fluid inlet 26.

The floor 210 includes a recessed portion 214 at the proximal end 110 proximate to the fluid inlet 26. In this regard, the floor 210 has an initial downward slope adjacent to the fluid inlet 26 and a subsequent upward slope, which may be at any location along the sorting channel 36. In non-limiting aspects, the upward slope may be arranged at a curve or bend in the sorting channel 36.

The recessed portion 214, alone or in combination with the cover portion 116, may assist with enlarging the sorting channel 36 proximate to the fluid inlet 26 and subsequently narrowing the sorting channel 36. Additionally, having the recessed portion 214 or lowering a portion of the floor 34 may assist with directing the liquids lower in the sorting channel 36 and, ultimately, into the liquids collection area 30. For example, as the speed of the working air slows due to the increase in size caused at least in part by the recessed portion 214, the liquids may begin to lower in the sorting channel 36 (i.e., adjacent the floor 210 in the recessed portion 214). A substantial amount of the liquids may be directed through the floor 210 in the recessed portion 214. Remaining liquids may continue to flow along the floor 210, and as the floor 210 slopes upward, the liquids may instead be directed into the upward-sloping floor 210, down/along the sloping surface, and through the floor 210. The recessed portion 214 may assist in controlling the airflow speed in the recovery tank assembly 24, as well as assist with separating the liquids into the liquids collection area 30.

Referring now to FIGS. 15 and 16, the recovery tank assembly 24 includes an additional or alternative configuration of a separator or floor 220 of the sorting channel 36 and a recovery tank 222. The remaining components of the recovery tank assembly 24 may be the same or substantially similar to any of the previous configurations described herein. In this configuration, the recovery tank 222 defines a single collection chamber 224 for the liquids collection area 30, and the solids collection area 32 is defined in the sorting channel 36.

The floor 220 extends between the fluid inlet 26 and the fluid outlet 28 and at least a portion 230 of the floor 220 is fluid or liquid permeable. In certain aspects, a substantial portion 230 or the entire length of the floor 220 is fluid permeable and disposed over the liquids collection area 30. Accordingly, the liquids may be directed through the floor 220 at any location between the fluid inlet 26 and the fluid outlet 28.

The floor 220 includes a recessed region 232, which may be similar to the recessed portion 214 in FIGS. 13 and 14 but extends over a greater length of the floor 220. The floor 220 may slope downward proximate to the fluid inlet 26 at the proximal end 110, which can assist with slowing the speed of air and directing the liquids through the floor 34 similarly to the sloping surfaces of the recessed portion 214 (FIGS. 13 and 14) described herein. The recessed region 232 may extend a substantial length of the floor 220 and form a receiving space that is the solids collection area 32. The distal end 114 of the sorting channel 36 may slope upwards, directing liquids to the liquids collection area 30 and retaining solid materials in the solids collection area 32. The recessed region 232 forms a basket for holding the solid materials over the collection chamber 224. Typically, the liquids are directed through the floor 220 at the proximal end 110 and the solid materials are collected at or toward the distal end 114, which may improve separation of the liquids and solid materials.

The floor 220 may be removable to dispose of the collected solids materials on the floor 220 and pour the liquids from the liquids collection area 30. In certain aspects, the lid 148 may include the lid portions 194, 196 (FIG. 12) to increase access to the solids collection area 32 and allow more convenient removal of the floor 220 or may include the outer lid portion 196 that mates with other components to form the sorting channel 36. The filter 178 may be disposed proximate to the fluid outlet 28 to assist with retaining the solids and liquids in the collection areas 30, 32, thereby reducing debris that is directed toward the suction source 18 (FIG. 1). The filter 178 may also operate as a stop or barrier for retaining the solid materials in the solids collection area 32.

In certain aspects, the recovery tank assembly 24 may include a movable flap 238. The movable flap 238 may be retracted or stowed, moving out of the sorting channel 36 and deployed, moving into or across the sorting channel 36. The movable flap 238 may be air permeable. In such examples, the movable flap 238 may act as an additional filter 178 for debris and a stop for at least the solid materials at the distal end 114 of the sorting channel 36.

Additionally or alternatively, the movable flap 238 may be generally fluid impermeable or solid. In such examples, the movable flap 238 may close the sorting channel 36, forcing the working air through the floor 220 and the liquids collection area 30. The working air may flow back through the floor 220 downstream of the flap 238 to flow through the filter 178 and the fluid outlet 28. Forcing the working air through the floor 34 may assist with separating the liquids into the liquids collection area 30 and retaining the solid materials in the solids collection area 32. Moreover, when a mixture of liquids and solid materials are captured by the recovery system 16 concurrently, the movable flap 238 may assist with pulling liquid from the solid materials or increasing separation between the liquids and solid materials. The movable flap 238 may assist in increasing the vacuum effect and/or controlling the speed of the working air through the recovery tank assembly 24 to assist the separation process.

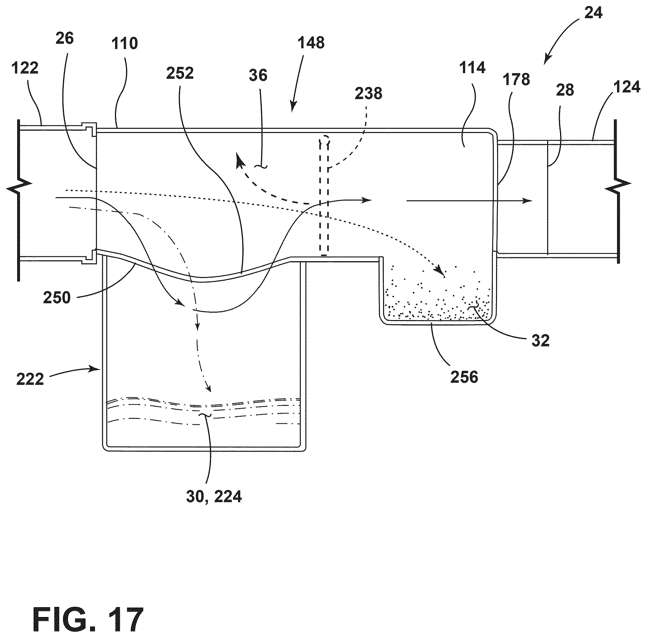

Referring now to FIG. 17, the recovery tank assembly 24 includes an additional or alternative configuration of a separator or floor 250 of the sorting channel 36, which can be used with the single chamber recovery tank 222 with the liquids collection area 30 of FIG. 16. The remaining components of the recovery tank assembly 24 may be the same or substantially similar as any configuration described herein. In this configuration, the floor 250 is liquid or fluid permeable at the proximal end 110 of the sorting channel 36. The floor 250 may be flat or recessed. The recessed configuration may assist in controlling the speed of airflow and assisting with directing the liquids through a fluid permeable portion 252 of the floor 250 and collected in the liquids collection area 30.

The solids collection area 32 may be spaced from the liquids collection area 30. In the illustrated configuration, the solids collection area 32 is included in a distal receptacle 256 downstream of the fluid permeable portion 252 of the floor 250 at the distal end 114 of the sorting channel 36. The distal receptacle 256 may be a recessed area of the floor 250 and may operate similarly to the recessed region 232 described in FIG. 16. Alternatively, the distal receptacle 256 may be a separate container, such as a second, single chamber recovery tank 222. The size of the sorting channel 36 may decrease between the fluid permeable portion 252 over the liquids collection area 30 and the distal receptacle 256 for increasing the airflow speed to carry the solid materials.

The floor 250 may be removable for disposing of the collected solid materials. Further, the floor 34 may also have a section (e.g., the fluid permeable portion 252) disposed in a space between the lid 148 and the recovery tank 222 and a section (e.g., the distal receptacle 256) outside of this space (e.g., adjacent to outer surfaces of the outer lid wall 150 and/or the recovery tank 222). This may further separate the two collection areas 30, 32.

Similar to the configuration in FIGS. 15 and 16, the configuration illustrated in FIG. 17 may also utilize the movable flap 238. In examples where the movable flap 238 is solid or fluid impermeable, the solid flap 238 may form a block for the liquids. Further, the solid flap 238 may temporarily retain the solid materials in the sorting channel 36 upstream of the solids collection area 32, which may assist in separating the liquids from the solid materials. Additionally or alternatively, the flap 238 may be disposed at the distal end 114 of the sorting channel 36 to form a block or stop for the solid materials proximate to the distal receptacle 256 to retain or deflect the solid materials into the distal receptacle 256.

Referring again to FIGS. 1-17, the recovery system 16 described herein is configured to sort collected liquids into the liquids collection area 30 and the collected solids materials into the solids collection area 32. The liquids and solid materials are collected in separate areas 30, 32, which may be more hygienic and allow for easier disposal of the captured debris. A substantial portion or substantially all the "dry" or solid materials is directed by the recovery system 16 to the solids collection area 32, and a substantial portion or substantially all the "wet" materials or liquids is directed by the recovery system 16 to the liquids collection area 30. This sorting process is accomplished without any additional steps by the consumer. At the end of the cleaning processes, the consumer is left with one area 30 containing liquids that can be poured out without straining a significant amount of solid debris materials, and a second area 32 containing solid materials that can be disposed of more easily (e.g., without cleaning a "sticky" type mixture when solids and liquids mix).

Use of the present device may provide for a variety of advantages. For example, the recovery system 16 may automatically separate liquids and solid materials in the cleaning apparatus 10, which may be a portable cleaner or an upright cleaner. The separation may occur when liquids are collected via the suction inlet 22, solid materials are collected via the suction inlet 22, or a combination of liquids and solid materials is collected via the suction inlet 22. At least some, if not a majority, of the components for sorting the liquids and solid materials may be included in the lid 148 or the outer lid portion 196 forming the lid 148. The lid 148 with the sorting components can be removed for ease of cleaning by the consumer.

Further, the configuration of the sorting channel 36, with bends and changing dimensions, can maximize the sorting process of the recovery tank assembly 24. The sorting channel 36 is generally a horizontal channel for separating the liquids and solid materials. Generally, the liquids can be collected in a lower collections area 30 below the separator/floor 34, while the solid materials can be collected in the chamber portion 138 of the recovery tank 130 (FIGS. 3-14), the recessed region 232 of the sorting channel 36 (FIGS. 15 and 16), the distal receptacle 256 (FIG. 17), or a separate tank 222. Moreover, the floor 34 may be removable to assist with disposing of the solid debris materials or for cleaning. Additionally, unlike filterbased systems, the recovery system 16 described herein separates the liquids from the working air first and the solid material is captured elsewhere, such that the collection of the solid materials does not substantially inhibit the collection of the recovery liquids. The separation of the solid generally, dryer materials from the liquids may be a more hygienic and can maximize the user experience, including by reducing a hard solid/liquid mixture from forming in the cleaning apparatus 10 and reducing or preventing clogs in the system 16. Additional benefits or advantages may be realized and/or achieved.

The device disclosed herein is further summarized in the following paragraphs and is further characterized by combinations of any and all various aspects described herein.

According to an aspect of the present disclosure, a cleaning apparatus includes a supply tank configured to hold a cleaning liquid. A liquid delivery system is in fluid communication with the supply tank for dispensing the cleaning liquid on a surface. A suction source is configured to generate a vacuum effect along an airflow path. A suction inlet is in fluid communication with the suction source. A recovery tank assembly is disposed along the airflow path between the suction inlet and the suction source. The recovery tank assembly includes a fluid inlet and a fluid outlet. A sorting channel extends between the fluid inlet and the fluid outlet. A proximal end of the sorting channel has a greater size than a distal end of the sorting channel for controlling a speed of airflow through the sorting channel. A separator at least partially defines the sorting channel. At least a portion of the separator is fluid permeable. A liquids collection area is disposed below the portion of the separator that is fluid permeable for collecting liquids. A solids collection area is disposed along the airflow path between the fluid inlet and the fluid outlet for collecting solid materials. The liquids and the solid materials are configured to be directed through the sorting channel by the suction source with the liquids being directed through the portion of the separator that is fluid permeable to be collected in the liquids collection area and the solid materials being collected in the solids collection area.

According to an aspect of the present disclosure, a cleaning apparatus includes a supply tank configured to hold a cleaning liquid. A liquid delivery system is in fluid communication with the supply tank for dispensing the cleaning liquid on a surface. A suction source is configured to generate a vacuum effect along an airflow path. A suction inlet is in fluid communication with the suction source. A recovery tank assembly is disposed along the airflow path between the suction inlet and the suction source. The recovery tank assembly includes a sorting channel between a fluid inlet and a fluid outlet. The lid at least partially defines the sorting channel. A floor at least partially defines the sorting channel. A recovery tank is configured to couple with the lid. The floor is disposed between the lid and the recovery tank. A liquids collection area is in the recovery tank. The liquids collection area and a solids collection area are disposed along the airflow path between the fluid inlet and the fluid outlet. Liquids and solid materials are configured to be directed through the sorting channel with the vacuum effect generated by the suction source and sorted into the liquids collection area and the solids collection area, respectively.

According to an aspect of the present disclosure, a fluid delivery and recovery system for a cleaning apparatus includes a supply tank configured to hold a cleaning liquid. A liquid delivery system is in fluid communication with the supply tank for dispensing the cleaning liquid on a surface. A suction source is configured to generate a vacuum effect along an airflow path. A suction inlet is in fluid communication with the suction source. A recovery tank includes a first chamber portion with a liquids collection area and a second chamber portion with a solids collection area. A dividing wall extends between the first chamber portion and the second chamber portion. A lid is operably coupled to the recovery tank to be disposed over the liquids collection area and the solids collection area. The lid includes a fluid inlet, a fluid outlet, a sorting channel coupling the fluid inlet with the fluid outlet, and a floor at least partially defining the sorting channel. The floor has a liquids permeable portion at a proximal end of the sorting channel and over the liquids collection area for collected liquids to be directed through the floor and into the liquids collection area. The floor defines a guide opening at a distal end of the sorting channel for collected solid materials to be directed from the sorting channel and into the solids collection area.

According to any preceding aspect of the present disclosure, a separator is a floor of a sorting channel.

According to any preceding aspect of the present disclosure, a floor defines a recessed portion proximate to a fluid inlet to form a greater size of a sorting channel at a proximal end.

According to any preceding aspect of the present disclosure, a floor defines a recessed region forming a solids collection area over a liquids collection area.

According to any preceding aspect of the present disclosure, a recovery tank assembly includes a chamber portion below a portion of a separator that is fluid permeable. The chamber portion includes a liquids collection area and a receptacle downstream of the liquids collection area including a solids collection area.

According to any preceding aspect of the present disclosure, a lid at least partially defines a sorting channel.

According to any preceding aspect of the present disclosure, a recovery tank includes at least the liquids collection area. A lid is operably coupled with the recovery tank. The lid includes a separator, a fluid inlet, and a fluid outlet.

According to any preceding aspect of the present disclosure, a recovery tank assembly includes an end wall at least partially defining a sorting channel and a guide opening adjacent to the end wall. The guide opening is in fluid communication with a solids collection area.

According to any preceding aspect of the present disclosure, a recovery tank assembly includes a recovery tank that defines a liquids collection area in a first chamber portion and a solids collection area in a second chamber portion. A portion of a separator that is fluid permeable is disposed above the first chamber portion and a guide opening is disposed above the second chamber portion.

According to any preceding aspect of the present disclosure, a first chamber portion is laterally adjacent to a second chamber portion.

According to any preceding aspect of the present disclosure, an inlet conduit is in fluid communication with a fluid inlet. The fluid inlet has a same size as a proximal end of a sorting channel. The fluid inlet has a greater size than the inlet conduit to slow a speed of airflow entering the sorting channel.

According to any preceding aspect of the present disclosure, a sorting channel is disposed above a recovery tank. A floor includes a fluid permeable portion over a liquids collection area in the recovery tank.

According to any preceding aspect of the present disclosure, a recovery tank includes a first chamber portion defining a liquids collection area and a second chamber portion defining a solids collection area. The first chamber portion and the second chamber portion are separated by a dividing wall.

According to any preceding aspect of the present disclosure, a first chamber portion is laterally adjacent to and upstream of a second chamber portion.

According to any preceding aspect of the present disclosure, a solids collection area is defined by a floor.

According to any preceding aspect of the present disclosure, a sorting channel is a horizontal channel that defines at least one curve to form at least one of a U shape and a J shape.

According to any preceding aspect of the present disclosure, a suction source is configured to draw liquids and solid materials through a suction inlet concurrently.

According to any preceding aspect of the present disclosure, a sorting channel has a first size at a proximal end and a second size at a distal end. The first size is greater than the second size for controlling a speed of airflow through the sorting channel.

It will be understood by one having ordinary skill in the art that construction of the described disclosure and other components is not limited to any specific material. Other exemplary embodiments of the disclosure disclosed herein may be formed from a wide variety of materials unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes, and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A cleaning apparatus (10), comprising:
a supply tank (12) configured to hold a cleaning liquid;
a liquid delivery system (14) in fluid communication with the supply tank (12) for dispensing the cleaning liquid on a surface;
a suction source (18) configured to generate a vacuum effect along an airflow path (20);
a suction inlet (22) in fluid communication with the suction source (18); and
a recovery tank assembly (24) disposed along the airflow path (20) between the suction inlet (22) and the suction source (18), wherein the recovery tank assembly (24) includes:
a fluid inlet (26) and a fluid outlet (28);
a sorting channel (36) extending between the fluid inlet (26) and the fluid outlet (28), wherein a proximal end (110) of the sorting channel (36) has a greater size than a distal end (114) of the sorting channel (36) for controlling a speed of airflow through the sorting channel (36);
a separator (34, 210, 220, 250) at least partially defining the sorting channel (36), wherein at least a portion (38, 212, 252) of the separator (34, 210, 220, 250) is fluid permeable;
a liquids collection area (30) disposed below the portion (38, 212, 252) of the separator (34, 210, 220, 250) that is fluid permeable for collecting liquids; and
a solids collection area (32) disposed along the airflow path (20) between the fluid inlet (26) and the fluid outlet (28) for collecting solid materials, wherein the liquids and the solid materials are configured to be directed through the sorting channel (36) by the suction source (18) with the liquids being directed through the portion (38, 212, 252) of the separator (34, 210, 220, 250) that is fluid permeable to be collected in the liquids collection area (30) and the solid materials being collected in the solids collection area (32).

2. The cleaning apparatus (10) of claim 1, wherein the separator (34, 210, 220, 250) is a floor (34, 210, 220, 250) of the sorting channel (36).

3. The cleaning apparatus (10) of claim 2, wherein the floor (210) defines a recessed portion (214) proximate to the fluid inlet (26) to form the greater size of the sorting channel (36) at the proximal end (110).

4. The cleaning apparatus (10) of claim 2, wherein the floor (220) defines a recessed region (232) forming the solids collection area (32) over the liquids collection area (30).

5. The cleaning apparatus (10) of claim 1, wherein the recovery tank assembly (24) includes:
a chamber (224) below the portion (252) of the separator (250) that is fluid permeable, the chamber (224) including the liquids collection area (30); and
a receptacle (256) downstream of the liquids collection area (30) and including the solids collection area (32).

6. The cleaning apparatus (10) of claim 1, further comprising:
a lid (148, 194, 196) at least partially defining the sorting channel (36).

7. The cleaning apparatus (10) of claim 6, further comprising:
a recovery tank (130, 222) including at least the liquids collection area (30), wherein the lid (148, 194, 196) is operably coupled with the recovery tank (130, 222), and wherein the lid (148, 194, 196) includes the separator (34, 210, 220, 250), the fluid inlet (26), and the fluid outlet (28).

8. The cleaning apparatus (10) of claim 7, wherein the sorting channel (36) is disposed above the recovery tank (130, 222), and wherein the portion (38, 212, 252) of the separator (34, 210, 220, 250) that is fluid permeable is at the proximal end (110) of the sorting channel (36) and over the liquids collection area (30) in the recovery tank (130, 222).

9. The cleaning apparatus (10) of any one of claims 1-8, wherein the recovery tank assembly (24) includes:
an end wall (158) at least partially defining the sorting channel (36); and
a guide opening (160) adjacent to the end wall (158), wherein the guide opening (160) is in fluid communication with the solids collection area (32).

10. The cleaning apparatus (10) of claim 9, wherein the recovery tank assembly (24) includes:
a recovery tank (130) that defines the liquids collection area (30) in a first chamber portion (136) and the solids collection area (32) in a second chamber portion (138), and wherein the portion (38, 212, 252) of the separator (34, 210, 220, 250) that is fluid permeable is disposed above the first chamber portion (136) and the guide opening (160) is disposed above the second chamber portion (138).

11. The cleaning apparatus (10) of claim 10, wherein the first chamber portion (136) is laterally adjacent to the second chamber portion (138).

12. The cleaning apparatus (10) of any one of claims 9-11, wherein the guide opening (160) is at the distal end (114) of the sorting channel (36) for collected solid materials to be directed from the sorting channel (36) and into the solids collection area (32).

13. The cleaning apparatus (10) of any one of claims 1-12, further comprising:
an inlet conduit (112) in fluid communication with the fluid inlet (26), wherein the fluid inlet (26) has a same size as the proximal end (110) of the sorting channel (36), and wherein the fluid inlet (26) has a greater size than the inlet conduit (112) to slow the speed of airflow entering the sorting channel (36).

14. The cleaning apparatus (10) of any one of claims 1-13, wherein the suction source (18) is configured to draw the liquids and the solid materials through the suction inlet (22) concurrently.

15. The cleaning apparatus (10) of any one of claims 1-14, wherein the sorting channel (36) is a horizontal channel (36) that defines at least one curve to form at least one of a U shape and a J shape.
